(19) **Europäisches Patentamt European Patent Office Office européen des brevets**

(11) **EP 2 937 132 B1**

(12) **EUROPEAN PATENT SPECIFICATION**

(45) Date of publication and mention
of the grant of the patent:
**22.02.2017 Bulletin 2017/08**

(51) Int Cl.:
*B01D 53/62* (2006.01)      *C10L 3/10* (2006.01)
*C01B 17/033* (2006.01)      *C09K 8/532* (2006.01)

(21) Application number: **14305598.6**

(22) Date of filing: **23.04.2014**

(54) **Method of dissoving sulphur deposits in wells with solvent and regeneration of sulphur solvent by h-donor compound**

Methode zur Auflösung von Schwefelablagerungen in Bohrlöchern mit Lösungsmitteln und Regenerierung der Schwefellösungsmittel durch H-Donor-Verbindungen

Méthode de la dissolution des dépôts de soufre avec un solvant et la régénération du solvant de soufre par un composé h-donneur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.10.2015 Bulletin 2015/44**

(73) Proprietor: **Total SA
92400 Courbevoie (FR)**

(72) Inventors:
• **Ghodasara, Kamlesh
92400 COURBEVOIE (FR)**

• **Weiss, Claire
92420 VAUCRESSON (FR)**
• **Clark, Peter David
Merritt, British Columbia V1K1B8 (CA)**

(74) Representative: **Cabinet Plasseraud
66 rue de la Chaussée d'Antin
75440 Paris Cedex 09 (FR)**

(56) References cited:
**US-A1- 2010 135 880**

**Description**

**Field of the invention**

The invention relates to a method for removing a sulphur deposit from a well and recovering an elemental sulphur stream, in which a liquid solvent dissolves all or part of the sulphur deposit, and said dissolved sulphur is converted into $H_2S$ by reduction with a H-donor compound, as well as a device for carrying out said method.

**Background**

Sour gas often contains significant amount of sulphur contaminants, especially dissolved elemental sulphur. This last one tends to form deposits, for example, on the well tubings/shafts of the gas gathering system, and in the downstream gas treating and processing equipment.

Various processes have been proposed for the prevention or removal of such sulphur deposit such as mechanical removal or injection into the well of sulphur solvent to dissolve the sulphur deposit. Mechanical removal processes necessitate shutting down the gas stream of the well, while injection processes offer the possibility to implement a continuous process. Various liquid solvents can be used to dissolve a sulphur deposit and should preferably meet the following criteria: rapid sulphur dissolution, high sulphur solubility in the solvent, easy regeneration, chemical and thermal stability of the solvent under the process conditions. Such liquid solvents include hydrocarbon oils, preferably aromatic (e.g alkyl naphthalene) in which sulphur solubility is higher than paraffinic solvents.

Due to the cost of the liquid solvents, their regeneration is necessary to have an economically viable process. The regeneration of the liquid solvents may be performed mechanically or chemically, for example by crystallization (US 2011/0262345), by the use of an aqueous solution comprising an amine (US 5,242,672), or by catalytic hydrogenation (US 7,988,767).

Crystatech patent (US 2011/0262345) discloses a method for removing a sulphur deposit with a liquid solvent regeneration performed by crystallization. However, the quality of the sulphur recovered from the crystallization technology is low because of trapped organic compounds.

US 5,242,672 discloses a typical regenerator unit using an aqueous solution comprising an amine. However, it requires a significant amount of energy. Furthermore, the amine solution may be easily chemically degraded and thus has to be often replaced. Finally, the resulting sulphide compound (polysulphide, sulphur...) may require additional processing to provide a suitable end product.

US 7,988,767 discloses a method for removing a sulphur deposit with a sulphur solvent regeneration by catalytic hydrogenation. This method requires continuous stream of hydrogen and a catalyst in order to regenerate the sulphur solvent thereby producing $H_2S$. However, this method requires operating conditions that can lead to the deactivation of the catalyst, to the decomposition/degradation of the solvent and to the formation of compounds named Carsul. Moreover this method incurs a lot of capital expenditure (CAPEX) due to the building of a hydrogen plant to provide the continuous stream of hydrogen.

Therefore, there is still a need to an provide improved process and a device for removing a sulphur deposit with a sulphur solvent that is simpler, has a lower CAPEX and results in elemental sulphur of higher quality.

The present invention meets all these needs by providing a method which can be integrated into the gas treatment facility, in particular in a sour gas treatment unit. The method of the invention actually utilizes units which are already known to treat sour gas, which therefore allows a significant reduction of the CAPEX. Furthermore, the method utilizes the hydrogen which may be produced in a Claus unit, a reducing gas generator of a TGT unit, or both units for regenerating the H-deplenished H-donor compound. Thus, in some embodiments, the method does not require the use of a separate hydrogen generator.

**Summary of the invention**

One object of the present invention is a method for removing a sulphur deposit from a well (1) in which a gas is flowing, comprising the following steps:

a) injecting a liquid solvent in said well (1) thereby dissolving all or part of the sulphur deposit in said liquid solvent, and forming a well output (2) that comprises the gas from the well (1) and a liquid sulphur rich solvent,

b) separating the well output (2) into a gas stream and a liquid sulphur rich solvent stream in a gas/liquid separation unit (3) and recovering said gas stream in a line (14) and said liquid sulphur rich solvent stream in a line (4),

c) introducing the liquid sulphur rich solvent stream from line (4) into a conversion unit (5) and performing conversion of dissolved sulphur into $H_2S$ by reaction under appropriate conditions with a H-donor compound, said H-donor compound being the liquid solvent, a liquid compound A which is injected into the conversion unit (5), or both, thereby resulting in the formation of a liquid H-deplenished H-donor compound, and

d) recovering a $H_2S$ gas stream in a line (11) and a liquid flow in a line (6) from the conversion unit (5).

In one embodiment, the H-donor compound is the liquid solvent and the method of the invention for removing a sulphur deposit further comprises the following steps:

e) contacting the liquid flow from line (6) with a regeneration gas in a regeneration unit (7) for performing regeneration of the H-deplenished liquid solvent, thereby resulting in the formation of a regenerated liquid solvent and an exhaust gas,

f) recovering the exhaust gas stream in a line (12),

g) recovering the regenerated liquid solvent in a line (8), and

h) reinjecting the regenerated liquid solvent in the well (1).

In one embodiment, the H-donor compound is the liquid compound A and the method of the invention for removing a sulphur deposit further comprises the following steps:

i1) injecting in a separation unit (30) the liquid flow from line (6) which comprises a H-deplenished liquid compound A and the liquid solvent and separating the H-deplenished liquid compound A from the liquid solvent,

i2) recovering the liquid solvent in a line (32) and injecting it in the well (1), and

i3) recovering the H-deplenished liquid compound A in a line (31).

In one embodiment, the H-donor compound is both the liquid solvent and the liquid compound A, the method of the invention for removing a sulphur deposit further comprises the following steps:

i4) injecting into a separation unit (30) the liquid flow from line (6) which comprises a H-deplenished liquid compound A and a H-deplenished liquid solvent and separating the H-deplenished liquid compound A from the H-deplenished liquid solvent,

i5) recovering the H-deplenished liquid solvent in a line (32) and injecting it in the well (1), and

i6) recovering the H-deplenished liquid compound A in a line (31).

In one embodiment, the method of the invention for removing a sulphur deposit further comprises the following steps:

j) contacting the H-deplenished liquid compound A recovered in a line (31) at step i3) or i6) with a regeneration gas in a regeneration unit (7) and performing regeneration of the liquid compound A, thereby resulting in the formation of a regenerated liquid compound A and an exhaust gas,

k) recovering the exhaust gas stream in a line (12), and

1) recovering the regenerated liquid compound A in a line (34) and injecting it in the conversion unit (5).

In one embodiment, the injection of the liquid solvent in the well (1) is performed continuously or sequentially.

In one embodiment, the gas flowing in the well (1) contains sulphur contaminants, and the amount of sulphur contaminants is less than 10 g/Sm$^3$, in particular less than 5 g/Sm$^3$ and more particularly less than 2 g/Sm$^3$.

In one embodiment, the rate of conversion reaction of step c) is from 10% to 100%, in particular from 90% to 99.5% and more particularly from 95% to 99%.

Another object of the present invention is a method for recovering elemental sulphur from a gas flowing in a well (1) and from a sulphur deposit from the well (1), said method comprising the previous steps a), b), c), d) and the following steps:

m) separating, in an AGR unit (15), the gas stream exiting the gas/liquid separation unit (3), recovered in the line (14), into a sweet hydrocarbon gas stream, recovered in a line (24), and an acid gas stream comprising $H_2S$, recovered in a line (16),

n) injecting the acid gas stream comprising $H_2S$ from line (16) in the Claus unit (17) to convert $H_2S$ into elemental sulphur and to produce a tail gas stream comprising sulphur compounds recovered in a line (19),

o) injecting into a TGT unit (20) the $H_2S$ gas stream recovered in the line (11), and the tail gas stream comprising sulphur compounds from line (19) to produce an enriched sulphur compounds gas stream comprising mainly $H_2S$ and a treated tail gas stream,

p) recovering said treated tail gas stream in a line (21) and said enriched sulphur compounds gas stream in a line (33) and recycling it in the Claus unit (17) to convert $H_2S$ into elemental sulphur, and

q) recovering elemental sulphur produced in steps n) and p) in a line (18).

Another object of the present invention is a method for recovering elemental sulphur from a gas flowing in a well (1) and from a sulphur deposit from the well (1) and for producing light hydrocarbon gas stream and light hydrocarbon cuts from said gas, said method comprising the previous steps a), b), c), d), m), n), o), p) q) and the following steps:

r) dehydrating and separating the sweet hydrocarbon gas stream recovered in line (24) into a light hydrocarbon gas stream and light hydrocarbon cuts, and

s) recovering separately the light hydrocarbon gas stream and the light hydrocarbon cuts respectively in a line (28) and a line (29).

In one embodiment, the regeneration gas is chosen from:

- a part of the reducing gas produced by the reducing gas generator of the TGT unit (20),
- a part of the tail gas recovered in line (19),
- a part of the treated tail gas recovered in line (21),
- or a mixture thereof.

Another object of the present invention is a device for carrying out the method of the invention for removing a sulphur deposit from a well (1) in which a gas is flowing, said device comprising:

- a gas/liquid separation unit (3) for separating the well output (2) into a gas stream recovered in a line (14) and a liquid sulphur rich solvent stream recovered in a line (4),
- a conversion unit (5) fed by the line (4) for performing conversion of dissolved sulphur into $H_2S$ by reaction under appropriate conditions with a H-donor compound, said H-donor compound being the liquid solvent, a liquid compound A which is injected into the conversion unit (5) by a line (34), or both, thereby resulting in the formation of a liquid H-deplenished H-donor compound,
- a line (11) for recovering a $H_2S$ gas stream from the conversion unit (5), and
- a line (6) for recovering a liquid flow from the conversion unit (5) and a regeneration unit (7) fed by line (6) or a separation unit (30) fed by line (6) prior to a regeneration unit (7), characterized in that the regeneration unit (7) is fed by line (13) comprising a regeneration gas for the regeneration of the liquid H-deplenished H-donor compound, thereby resulting in the formation of a regenerated liquid H-donor compound and an exhaust gas stream.

In one embodiment, the device for carrying out the method of the invention for removing a sulphur deposit from a well (1) in which a gas is flowing, wherein the H-donor compound is the liquid solvent further comprises:

- a regeneration unit (7) fed by the line (6) comprising the liquid flow and by a line (13) comprising a regeneration gas, for performing the regeneration of the H-deplenished liquid solvent, thereby resulting in the formation of a regenerated liquid solvent and an exhaust gas stream,
- a line (12) for recovering the exhaust gas stream from the regeneration unit (7),
- a line (8) for recovering the regenerated liquid solvent from the regeneration unit (7), and
- a pump (9) fed by the line (8) for pressurizing the regenerated liquid solvent prior to its reinjection in the well (1) by a line (10).

In one embodiment, the device for carrying out the method of the invention for removing a sulphur deposit from a well (1) in which a gas is flowing, wherein the H-donor compound is the liquid compound A further comprises:

- a separation unit (30) fed by the line (6) comprising the liquid flow which comprises a H-deplenished liquid compound A and the liquid solvent, for separating the H-deplenished liquid compound A from the liquid solvent,
- a line (32) for recovering the liquid solvent from the separation unit (30),
- a pump (9) fed by the line (32) for pressurizing the liquid solvent prior to its reinjection in the well (1) by a line (10),
- a line (31) for recovering the H-deplenished liquid compound A from the separation unit (30),
- a regeneration unit (7) fed by the line (31) comprising the H-deplenished liquid compound A and by a line (13) comprising a regeneration gas, for performing the regeneration of the H-deplenished liquid compound A, thereby resulting in the formation of a regenerated liquid compound A and an exhaust gas stream,
- a line (12) for recovering the exhaust gas stream from the regeneration unit (7), and
- a line (34) for recovering the regenerated liquid compound A from the regeneration unit (7) and reinjecting it in the conversion unit (5).

In one embodiment, the device for carrying out the method of the invention for removing a sulphur deposit from a well (1) in which a gas is flowing, wherein the H-donor compound is both the liquid solvent and the liquid compound A further comprises:

- a separation unit (30) fed by the line (6) comprising the liquid flow which comprises a H-deplenished liquid compound A and the H-deplenished liquid solvent, for separating the H-deplenished liquid compound A from the H-deplenished liquid solvent,
- a line (32) for recovering the H-deplenished liquid solvent from the separation unit (30),
- a pump (9) fed by line (32) for pressurizing the H-deplenished liquid solvent prior to its reinjection in the well (1) by a line (10),
- a line (31) for recovering the H-deplenished liquid compound A from the separation unit (30),
- a regeneration unit (7) fed by the line (31) and by a line (13) comprising a regeneration gas, for performing the regeneration of the H-deplenished liquid compound A, thereby resulting in the formation of a regenerated liquid compound A and an exhaust gas stream,
- a line (12) for recovering the exhaust gas stream from the regeneration unit (7), and
- a line (34) for recovering the regenerated liquid compound A from the regeneration unit (7) and reinjecting it in the conversion unit (5).

Another object of the present invention is a device for carrying out the method of the invention for recovering elemental sulphur from a gas flowing in a well (1) and from a sulphur deposit from the well (1), wherein said device comprises the units as previously described and further comprises:

- an AGR unit (15) fed by the line (14) comprising the gas stream for separating it into a sweet hydrocarbon gas stream recovered in a line (24) and an acid gas stream comprising $H_2S$ recovered in a line (16),
- a Claus unit (17) fed by the line (16) and a line (33), said Claus unit (17) having an exit line (18) for recovering an elemental sulphur, and an another exit line (19) for recovering a tail gas stream comprising sulphur compounds,
- a TGT unit (20) fed by the line (19) and having an exit line (21) for recovering a treated tail gas stream and the line (33) to recover an enriched sulphur compounds gas stream, comprising mainly $H_2S$, said TGT unit (20) comprising a reducing gas generator and, in the direction of the gas stream flow, an hydrogenation reactor, a quench tower and an absorber, wherein:

  • a reducing gas is produced by the reducing gas generator for feeding the hydrogenation reactor of the TGT unit (20),
  • the hydrogenation reactor converts the sulphur compounds of the tail gas stream into $H_2S$,
  • the quench tower, fed by the gas stream from the hydrogenation reactor and the $H_2S$ gas stream of line (11), produces a cooled tail gas stream comprising sulphur compounds, mainly $H_2S$,
  • in the absorber, the sulphur compounds, mainly $H_2S$, are separated from the other constituents of the cooled tail gas stream thereby producing the treated tail gas stream, recovered in the line (21), and the enriched sulphur compounds gas stream, comprising mainly $H_2S$, recovered in the line (33) to be recycled upstream to the Claus unit (17),

Another object of the present invention is a device for carrying out the method of the invention for recovering elemental sulphur from a gas flowing in a well (1) and from a sulphur deposit from the well (1) and for producing light hydrocarbon gas stream and light hydrocarbon cuts from said gas, wherein said device comprises the units as previously described and further comprises:

- a dehydration unit (25) fed by the line (24) for dehydrating the sweet hydrocarbon gas stream, and connected to a line (26) to recover a dehydrated sweet hydrocarbon gas stream,
- a fractionation unit (27) fed by the line (26) for separating the dehydrated sweet hydrocarbon gas stream into a light hydrocarbon gas stream and a light hydrocarbon cuts recovered, respectively, in a line (28) and in a line(29).

In one embodiment, the line (13) of said device is connected to the line (19) to recover a part of the tail gas stream, and/or to the reducing gas generator to recover a part of the reducing gas, and/or to the line (21) to recover a part of the treated tail gas stream, to feed the regeneration unit (7).

**Brief description of the figures**

Figure 1 is a schematic representation of the process and device of the invention, wherein the H-donor compound is the liquid solvent.

Figure 2 is a schematic representation of the process and device of the invention, wherein the H-donor compound is a liquid compound A.

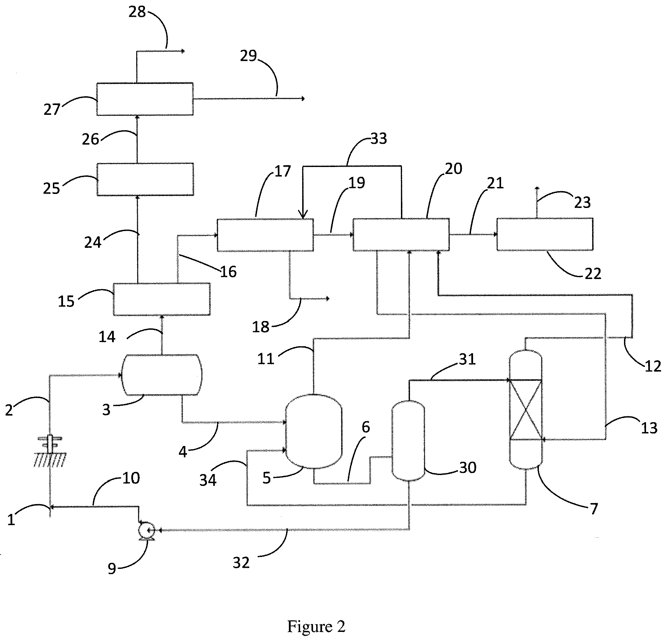

Figure 2 is also a schematic representation of the process and device of the invention, wherein the H-donor compound is both the liquid solvent and a liquid compound A.

**Detailed description of the invention**

A method according to the invention applies to the removal of a sulphur deposit from a well (1) in which a gas is flowing, by dissolution with a liquid solvent and to the conversion of the dissolved sulphur into $H_2S$ by a reaction with a H-donor compound.

Another method according to the invention applies to the recovery of elemental sulphur from a gas flowing in a well (1) and from the sulphur deposit from the well (1)

Another method according to the invention applies to the recovery of elemental sulphur from a gas flowing in a well (1) and from a sulphur deposit from the well (1) and for producing light hydrocarbon gas stream and light hydrocarbon cuts from said gas.

A device according to the invention is for carrying out the methods according to the invention.

In the following description, the feeding of a unit or any other part of the device with a line includes direct feeding as well as indirect feeding, for instance where the feeding stream is subjected to a treatment prior to be fed to said unit or part, such as a dehydration treatment.

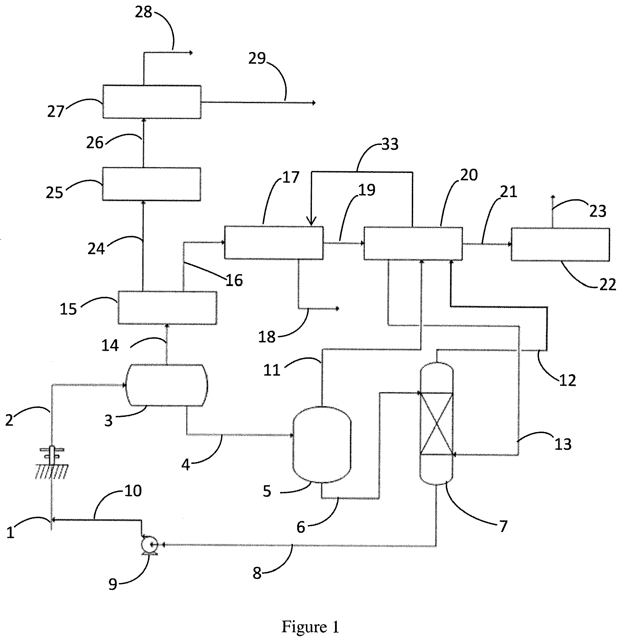

The invention is now described in more details by referring to Figure 1.

Natural gas is extracted underground using a well 1. A sulphur deposit is formed because the gas flowing in the well 1 contains sulphur contaminants. The method of the invention is not limited to any particular concentration of sulphur contaminants in the gas. The amount of sulphur contaminants in the gas flowing in the well 1 is typically less than 10 $g/Sm^3$, in particular less than 5 $g/Sm^3$ and more particularly less than 2 $g/Sm^3$.

According to the step a) of the method of the invention, a liquid solvent is injected in the well 1, thereby dissolving all or part of the sulphur deposit in said liquid solvent, and forming a well output 2 comprising the gas from the well 1 and a liquid sulphur rich solvent.

The injection of the liquid solvent in the well 1 is performed continuously or sequentially.

The liquid solvent is any hydrocarbon component able to dissolve a sulphur deposit. Preferably, the liquid solvent is chosen from naphthenic hydrocarbon, paraffinic hydrocarbon, aromatic hydrocarbon, or mixtures thereof. More preferably, the liquid solvent is selected in the group comprising aromatic compounds, in particular, biphenyl, biphenyl oxide, toluene, tetralin and mixture thereof.

By "liquid sulphur rich solvent" it is meant the liquid solvent wherein all or parts of the sulphur deposit have been dissolved. The liquid sulphur rich solvent may contain from 1.0 wt% to 10.0 wt% weight of dissolved sulphur. This percentage is expressed in number of kg of dissolved sulphur with respect to the total number of kg of the liquid solvent. The dissolved sulphur can be in the form of elemental sulphur

According to the step b) of the method of the invention, the well output 2 is then separated in a gas/liquid separation unit 3 into a gas stream recovered in a line 13 and a liquid sulphur rich solvent stream recovered in line 4.

According to the step c) of the method of the invention, the liquid sulphur rich solvent stream, recovered in the line 4 from the gas/liquid separation unit 3, is then introduced into a conversion unit 5 for performing conversion of dissolved sulphur contained in the liquid sulphur rich solvent into $H_2S$ by reaction under appropriate condition with a H-donor compound, thereby resulting in the formation of a liquid H-deplenished H-donor compound and an $H_2S$ gas stream. Thereafter this reaction is named as the conversion reaction.

An "H-donor compound" is defined as any hydrocarbon compound which is able to give at least one hydrogen atom in order to react with the dissolved sulphur contained in the liquid sulphur rich solvent to form $H_2S$.

According to the present invention, the H-donor compound is the liquid solvent itself, a liquid compound A other than the liquid solvent that is injected in the conversion unit 5, or both.

An "H-deplenished H-donor compound" is defined as the reaction product formed from the H-donor compound further to the conversion reaction.

The rate of conversion is the ratio of mole number of $H_2S$ produced over the mole number of dissolved elemental sulphur in the liquid sulphur rich solvent.

Figure 1 represents a first embodiment of the invention wherein the H-donor compound is the liquid solvent itself. In that case, the liquid solvent is able to donate at least one hydrogen atom to the dissolved sulphur contained in the liquid sulphur rich solvent in order to form $H_2S$.

According to one embodiment, the rate of the conversion reaction is from 10% to 100%, in particular from 90% to 99.5% and more particularly from 95% to 99%.

According to one embodiment, the temperature of the conversion reaction is from 150°C to 350°C, preferably from 200°C to 300°C, and more preferably from 220°C to 280°C.

The conversion reaction leads to the production of two products: an $H_2S$ gas stream and a liquid flow comprising H-deplenished liquid solvent compound, which naturally separates one to each other. According to the step d) of the method of the invention, the $H_2S$ gas stream and the liquid flow are recovered at different exits of the conversion unit 5, respectively in a line 11 and in a line 6.

The gas stream exiting the gas/liquid separation unit 3 recovered in the line 14 is separated in an Acid Gas Removal (AGR) unit 15 into a sweet hydrocarbon gas stream recovered in a line 24 and an acid gas stream comprising $H_2S$ recovered in a line 16.

The sweet hydrocarbon gas stream is then dehydrated in a dehydration unit 25 connected to a line 26 to recover a dehydrated sweet hydrocarbon gas stream. This gas is then separated in a fractionation unit 27 into a light hydrocarbon gas stream and a light hydrocarbon cuts recovered separately and respectively in a line 28 and in a line 29.

The acid gas stream comprising $H_2S$ is injected in a Claus unit 17 to convert $H_2S$ into elemental sulphur which is recovered in a line 18, and to produce a tail gas stream comprising sulphur compounds such as $SO_2$, S, COS and $CS_2$ and other compounds, such as $H_2$. The tail gas stream is recovered in a line 19 and is fed into a Tail Gas Treatment (TGT) unit 20 in order to convert the sulphur compounds of the tail gas stream into $H_2S$.

The $H_2S$ gas stream produced by the conversion reaction and recovered in a line 11 is injected into the TGT unit 20 to produce an enriched sulphur compounds gas stream comprising mainly $H_2S$, as described further on. The enriched sulphur compounds gas stream is recovered in a line 33 and recycled in the Claus unit 17 to convert $H_2S$ into elemental sulphur which is recovered in a line 18.

The TGT unit 20 comprises, in the direction of the gas stream flow, an hydrogenation reactor, a quench tower and an absorber (not represented). The TGT unit 20 further comprises a reducing gas generator.

In the hydrogenation reactor, the sulphur compounds such as $SO_2$, S, COS and $CS_2$ of the tail gas stream exiting the Claus unit 17 through line 19 are converted into $H_2S$, thanks to a reducing gas produced by the reducing gas generator.

The gas stream from the hydrogenation reactor is then passed through the quench tower, in order to remove its excess of water. According to one embodiment of the invention, the $H_2S$ gas stream produced by the conversion unit 5 and recovered in line 11 is injected into the quench tower of the TGT unit 20 to be cooled. Consequently, the two gas streams are mixed in the quench tower and a cooled tail gas stream containing sulphur compounds, mainly $H_2S$ is obtained.

The cooled tail gas stream containing sulphur compounds exiting the quench tower is then passed through the absorber wherein sulphur compounds, mainly $H_2S$, are separated from the other constituents of the tail gas stream thereby resulting in the production of two gas streams recovered at the exit of the TGT unit: a treated tail gas stream, which may comprise $H_2$, recovered in line 21 and an enriched sulphur compounds gas stream, comprising mainly $H_2S$, recovered in line 33.

The treated tail gas stream recovered in a line 21 is then injected in an incinerator 22 to be burned and to produce a flue gas stream recovered in line 23. The enriched sulphur compounds gas stream recovered in a line 33 is recycled upstream to the Claus unit 17 wherein $H_2S$ is converted into elemental sulphur which is recovered in the line 18.

According to Figure 1, the liquid flow recovered in the line 6 from the conversion unit 5 comprises an H-deplenished liquid solvent and is injected in the regeneration unit 7.

In the regeneration unit 7, the liquid flow is contacted with a regeneration gas from line 13 for performing regeneration of the H-deplenished liquid solvent, thereby resulting in the formation of a regenerated liquid solvent and an exhaust gas stream.

In a variant, the H-deplenished liquid solvent may be regenerated in a refinery, outside the facility.

In another variant, the H-deplenished liquid solvent may not be regenerated.

A "regeneration gas" is defined as any gas having reduction properties, such as $H_2$, and able to perform, in the regeneration unit 7, the regeneration of the H-deplenished H-donor compound to produce a regenerated H-donor compound.

In the present invention, the reducing gas produced by the reducing gas generator comprises $H_2$, while the tail gas in line 19 and the treated tail gas stream in line 21 may comprise $H_2$. These three different gases may thus be used as the regeneration gas used in the regeneration unit 7.

According to a preferred embodiment, the regeneration gas is chosen from:

- a part of the reducing gas produced by the reducing gas generator,
- a part of the tail gas recovered in line 19,
- a part of the treated tail gas recovered in line 21,

- or a mixture thereof.

The line 13, which comprises the regeneration gas and feeds the regeneration unit 7, may be connected to the line 19 and/or the line 21 and/or the reducing gas generator of the TGT unit 20. The Figures 1 and 2 represent the case wherein the line 13 is only connected to the reducing gas generator of the TGT unit 20.

The exhaust gas stream is recovered in a line 12 and can be injected in the quench tower of the TGT unit 20 to be treated further in the same way as the $H_2S$ gas stream of line 11 and the gas stream from the hydrogenation reactor injected in the quench tower too, as described previously.

The regenerated liquid solvent is recovered in a line 8, and then pressurized in a pump 9 to be reinjected in the well 1 by a line 10.

Figure 2 represents another embodiment of the invention, wherein the H-donor compound is the liquid compound A. In that case, the liquid compound A is able to donate at least one hydrogen atom to the dissolved sulphur contained in the liquid sulphur rich solvent in order to form $H_2S$. According to this embodiment, the liquid flow, recovered in the line 6 from the conversion unit 5, comprises an H-deplenished liquid compound A and the liquid solvent.

Figure 2 also represents another embodiment of the invention, wherein the H-donor compound is both the liquid solvent and the liquid compound A. In that case, both the liquid solvent and the liquid compound A are able to donate at least one hydrogen atom to the dissolved sulphur contained in the liquid sulphur rich solvent in order to form $H_2S$. According to this embodiment, the liquid flow, recovered in the line 6 from the conversion unit 5, comprises an H-deplenished liquid compound A and the H-deplenished liquid solvent.

The liquid compound A may be chosen from a naphthenic hydrocarbon, a paraffinic hydrocarbon, an aromatic hydrocarbon, or mixtures thereof. Preferably, the liquid compound A is chosen from tetralin, partially saturated aromatic compounds or alkyl aromatic compounds which has capability to donate hydrogen to the dissolved sulphur into liquid solvent at suitable temperature and pressure, more preferably the liquid compound A is tetralin.

According to the Figure 2, a separation unit 30 is integrated after the conversion unit 5 and before the regeneration unit 7.

According to the specific embodiment wherein the H-donor compound is the liquid compound A, the liquid flow recovered in the line 6 is fed in the separation unit 30 wherein the H-deplenished liquid compound A is separated from the liquid solvent and recovered in a line 31. The liquid solvent is recovered in a line 32, and then pressurized in the pump 9 to be reinjected in the well 1 by a line 10.

According to the specific embodiment wherein the H-donor compound is both the liquid solvent and the liquid compound A, the liquid flow recovered in the line 6 is fed in the separation unit 30 wherein the H-deplenished liquid compound A is separated from the H-deplenished liquid solvent and recovered in a line 31. If the H-deplenished liquid solvent has the same ability to dissolve the sulphur deposit as the liquid solvent, it may not be regenerated. The H-deplenished liquid solvent is recovered in a line 32, and then pressurized in the pump 9 to be reinjected in the well 1 by a line 10.

The H-deplenished liquid compound A recovered in a line 31 from the separation unit 30 is injected in the regeneration unit 7 to be contacted with a regeneration gas from line 13 for performing regeneration of the H-deplenished liquid compound A, thereby resulting in the formation of a regenerated liquid compound A and an exhaust gas stream.

In a variant, the H-deplenished liquid compound A may be regenerated in a refinery, outside the facility.

The regenerated liquid compound A is recovered in a line 34 and then injected in the conversion unit 5.

The exhaust gas stream is recovered in a line 12 to be injected in the quench tower of the TGT unit 20 to be treated further, as described previously.

According to one embodiment, the regeneration reaction of the H-deplenished liquid solvent or the H-deplenished liquid compound A is performed from 150°C to 350°C, preferably from 200°C to 300°C, and more preferably from 220°C to 280°C.

According to one embodiment, the regeneration reaction of the H-deplenished liquid solvent or H-deplenished liquid compound A is performed from 5 bar to 50 bar, preferably from 10 bar to 30 bar, and more preferably from 15 bar to 25 bar.

The steps as described previously may also be performed for recovering elemental sulphur from a gas flowing in a well 1 and from the sulphur deposit from the well 1; or recovering elemental sulphur from a gas flowing in a well 1 and from a sulphur deposit from the well 1 and for producing light hydrocarbon gas stream and light hydrocarbon cuts from said gas.

Another object of the invention is thus a method for recovering elemental sulphur from a gas flowing in a well 1 and from a sulphur deposit from the well 1, comprising the following steps:

a) injecting a liquid solvent in said well 1 thereby dissolving all or part of the sulphur deposit in said liquid solvent, and forming a well output 2 that comprises the gas from the well 1 and a liquid sulphur rich solvent,
b) separating the well output 2 into a gas stream and a liquid sulphur rich solvent stream in a gas/liquid separation unit 3 and recovering said gas stream in a line 14 and said liquid sulphur rich solvent stream in a line 4,

c) introducing the liquid sulphur rich solvent stream from line 4 into a conversion unit 5 and performing conversion of dissolved sulphur into $H_2S$ by reaction under appropriate conditions with a H-donor compound, said H-donor compound being the liquid solvent, a liquid compound A which is injected into the conversion unit 5, or both, thereby resulting in the formation of a liquid H-deplenished H-donor compound,

d) recovering a $H_2S$ gas stream in a line 11 and a liquid flow in a line 6 from the conversion unit 5,

m) separating, in an AGR unit 15, the gas stream exiting the gas/liquid separation unit 3, recovered in the line 14, into a sweet hydrocarbon gas stream, recovered in a line 24, and an acid gas stream comprising $H_2S$, recovered in a line 16,

n) injecting the acid gas stream comprising $H_2S$ from line 16 in the Claus unit 17 to convert $H_2S$ into elemental sulphur and to produce a tail gas stream comprising sulphur compounds recovered in a line 19,

o) injecting into a TGT unit 20 the $H_2S$ gas stream recovered in the line 11, the tail gas stream comprising sulphur compounds from line 19 to produce an enriched sulphur compounds gas stream comprising mainly $H_2S$ and a treated tail gas stream,

p) recovering said treated tail gas stream in a line 21 and said enriched sulphur compounds gas stream in a line 33 and recycling it in the Claus unit 17 to convert $H_2S$ into elemental sulphur, and

q) recovering the elemental sulphur produced in steps n) and p) in a line 18.

Another object of the invention is thus a method for recovering elemental sulphur from a gas flowing in a well 1 and from a sulphur deposit from the well 1 and for producing light hydrocarbon gas stream and light hydrocarbon cuts from said gas, comprising the following steps:

a) injecting a liquid solvent in said well 1 thereby dissolving all or part of the sulphur deposit in said liquid solvent, and forming a well output 2 that comprises the gas from the well 1 and a liquid sulphur rich solvent,

b) separating the well output 2 into a gas stream and a liquid sulphur rich solvent stream in a gas/liquid separation unit 3 and recovering said gas stream in a line 14 and said liquid sulphur rich solvent stream in a line 4,

c) introducing the liquid sulphur rich solvent stream from line 4 into a conversion unit 5 and performing conversion of dissolved sulphur into $H_2S$ by reaction under appropriate conditions with a H-donor compound, said H-donor compound being the liquid solvent, a liquid compound A which is injected into the conversion unit 5, or both, thereby resulting in the formation of a liquid H-deplenished H-donor compound,

d) recovering a $H_2S$ gas stream in a line 11 and a liquid flow in a line 6 from the conversion unit 5,

m) separating, in an AGR unit 15, the gas stream exiting the gas/liquid separation unit 3, recovered in the line 14, into a sweet hydrocarbon gas stream, recovered in a line 24, and an acid gas stream comprising $H_2S$, recovered in a line 16,

n) injecting the acid gas stream comprising $H_2S$ from line 16 in the Claus unit 17 to convert $H_2S$ into elemental sulphur and to produce a tail gas stream comprising sulphur compounds recovered in a line 19,

o) injecting into a TGT unit 20 the $H_2S$ gas stream recovered in the line 11, the tail gas stream comprising sulphur compounds from line 19 to produce an enriched sulphur compounds gas stream comprising mainly $H_2S$ and a treated tail gas stream,

p) recovering said treated tail gas stream in a line 21 and said enriched sulphur compounds gas stream in a line 33 and recycling it in the Claus unit 17 to convert $H_2S$ into elemental sulphur,

q) recovering the elemental sulphur produced in steps n) and p) in a line 18,

r) dehydrating and separating the sweet hydrocarbon gas stream recovered in line 24 into a light hydrocarbon gas stream and light hydrocarbon cuts, and

s) recovering separately the light hydrocarbon gas stream and the light hydrocarbon cuts respectively in a line 28 and a line 29.

Another object of the invention is a device for carrying out the methods of the invention. Said device is now described in more details by referring to Figure 1 and comprises:

- a gas/liquid separation unit 3 for separating the well output 2 into a gas stream recovered in line 14 and a liquid sulphur rich solvent stream recovered in line 4,

- a conversion unit 5 fed by line 4 for performing conversion of dissolved sulphur into $H_2S$ by reaction under appropriate conditions with a H-donor compound, said H-donor compound being the liquid solvent, a liquid compound A which is injected into the conversion unit 5 by a line 34, or both, thereby resulting in the formation of a liquid H-deplenished H-donor compound,

- a line 11 for recovering a $H_2S$ gas stream from the conversion unit 5, and

- a line 6 for recovering a liquid flow from the conversion unit 5 and a regeneration unit 7 fed by line 6 or a separation unit 30 fed by line 6 prior to a regeneration unit 7, characterized in that the regeneration unit 7 is fed by line 13 comprising a regeneration gas for the regeneration of the liquid H-deplenished H-donor compound, thereby resulting in the formation of a regenerated liquid H-donor compound and an exhaust gas stream.

The gas/liquid separation unit 3 is a common gas/liquid separator. It is able to separate and to recover the liquid sulphur rich stream in line 4 and the gas stream in line 14.

The conversion unit 5 is a common reactor to perform liquid-liquid reaction with production of a gas stream and a liquid flow.

The device may further comprise:

- an AGR unit 15 fed by the line 14 comprising the gas stream for separating it into a sweet hydrocarbon gas stream recovered in a line 24 and an acid gas stream comprising $H_2S$ recovered in a line 16,
- a Claus unit 17 fed by the line 16 and a line 33, said Claus unit 17 having an exit line 18 for recovering an elemental sulphur, and an another exit line 19 for recovering a tail gas stream comprising sulphur compounds,
- a TGT unit 20 fed by the line 19 and having an exit line 21 for recovering a treated tail gas stream and a line 33 to recover an enriched sulphur compounds gas stream, comprising mainly $H_2S$, said TGT unit 20 comprising a reducing gas generator and, in the direction of the gas stream flow, an hydrogenation reactor, a quench tower and an absorber, wherein:

  • a reducing gas is produced by the reducing gas generator for feeding the hydrogenation reactor of the TGT unit 20,
  • the hydrogenation reactor converts the sulphur compounds of the tail gas stream into $H_2S$,
  • the quench tower, fed by the gas stream from the hydrogenation reactor and the $H_2S$ gas stream of line 11, produces a cooled tail gas stream comprising sulphur compounds, mainly $H_2S$,
  • in the absorber, the sulphur compounds, mainly $H_2S$, are separated from the other constituents of the cooled tail gas stream thereby producing the treated tail gas stream, recovered in the line 21, and the enriched sulphur compounds gas stream, comprising mainly $H_2S$, recovered in the line 33 to be recycled upstream to the Claus unit 17,

The quench tower of said device may also be fed by the exhaust gas stream of line 12 from the regeneration unit 7.

To feed the regeneration unit 7, the line 13 of said device may be connected to the line 19 to recover a part of the tail gas stream, and/or to the reducing gas generator to recover a part of the reducing gas, and/or to the line 21 to recover a part of the treated tail gas stream.

The device may further comprise an incinerator 22 fed by the exit line 21 for burning the treated tail gas stream and producing a flue gas stream recovered in a line 23.

Furthermore, the device may comprise:

- a dehydration unit 25 fed by the line 24 for dehydrating the sweet hydrocarbon gas stream, and connected to a line 26 to recover a dehydrated sweet hydrocarbon gas stream,
- a fractionation unit 27 fed by the line 26 for separating the dehydrated sweet hydrocarbon gas stream into a light hydrocarbon gas stream and a light hydrocarbon cuts recovered, respectively, in a line 28 and in a line 29,

The AGR unit 15 may be typically an amine washing unit. According to the desired specification, the amine solutions may include DEA (di-ethanol amine), MDEA (methyl-di-ethanol amine) or activated MDEA or any other amine-based solution known in the art as an absorbing solution.

According to the water dew point desired, the dehydration unit 25 may use a dehydration solvent such as glycol or triethylene glycol (TEG), or molecular sieves.

The fractionation unit 27 generally assures the fractionation; classically it comprises a deethanizer, a depropanizer and a debutanizer.

The Claus unit 17 is fed with an oxidative agent comprising oxygen in order to allow oxidation of $H_2S$ into elemental sulphur. The oxidative agent may be air, pure oxygen or a mixture mostly comprising oxygen and nitrogen, wherein the amount of nitrogen does not exceed 80 %.

The hydrogenation reactor of the TGT unit 20 typically comprises a catalyst bed with hydrogenation catalysts, such as CoMo, wherein the sulphur compounds such as $SO_2$, S, COS and $CS_2$ are converted into $H_2S$, thanks to a reducing gas produced by the reducing gas generator from a mixture of fuel, steam and air.

The absorber may be an amine-based unit but any other suitable absorbing unit may be used. The device may further comprise a stripper column (not represented) in order to separate the absorbing solution from the sulphur compounds, mainly $H_2S$, thereby producing an enriched sulphur compounds gas stream, comprising mainly $H_2S$. The absorbing solution may be recovered at the bottom of the stripper column and recycled to the absorber, while the enriched sulphur compounds gas stream, comprising mainly $H_2S$ is recovered in line 33.

Figure 1 represents a device according to the embodiment wherein the H-donor compound is the liquid solvent, the liquid flow in line 6 comprises an H-deplenished liquid solvent, and the device further comprises:

- a regeneration unit 7 fed by the line 6 comprising the liquid flow and by the line 13 comprising the regeneration gas stream, for performing the regeneration of the H-deplenished liquid solvent, thereby resulting in the formation of a regenerated liquid solvent and an exhaust gas stream,
- a line 12 for recovering the exhaust gas stream from the regeneration unit 7,
- a line 8 for recovering the regenerated liquid solvent from the regeneration unit 7, and
- a pump 9 fed by the line 8 for pressurizing the regenerated liquid solvent prior to its reinjection in the well 1 by a line 10.

The Figure 2 represents another device according to the embodiment of the present invention wherein the H-donor compound is the liquid compound A. According to this embodiment, the liquid flow, recovered in the line 6 from the conversion unit 5, comprises an H-deplenished liquid compound A and the liquid solvent.

According to this embodiment, the device comprises the same units as the device of the Figure 1, and it comprises, after the conversion unit 5 and before the regeneration unit 7, a separation unit 30 fed by line 6 for separating the H-deplenished liquid compound A from the liquid solvent. Said device also further comprises:

- a line 32 for recovering the liquid solvent from the separation unit 30,
- a line 31 for recovering the H-deplenished liquid compound A from the separation unit 30 and injecting it into the regeneration unit 7, thereby resulting in the formation of a regenerated liquid compound A and an exhaust gas stream,
- a line 12 for recovering the exhaust gas stream from the regeneration unit 7, and
- a line 34 for recovering the regenerated liquid compound A from the regeneration unit 7 and injecting it in the conversion unit 5.

The Figure 2 also represents another device according to the embodiment of the present invention, wherein the H-donor compound is both the liquid solvent and the liquid compound A. According to this embodiment, the liquid flow, recovered in the line 6 from the conversion unit 5, comprises an H-deplenished liquid compound A and the H-deplenished liquid solvent.

According to this embodiment, the device comprises the same units as the device of the Figure 1, and it comprises, after the conversion unit 5 and before the regeneration unit 7, a separation unit 30 fed by line 6 for separating the H-deplenished liquid compound A from the H-deplenished liquid solvent. Said device also further comprises:

- a line 32 for recovering the H-deplenished liquid solvent from the separation unit 30,
- a line 31 for recovering the H-deplenished liquid compound A from the separation unit 30 and injecting it into the regeneration unit 7, thereby resulting in the formation of a regenerated liquid compound A and an exhaust gas stream,
- a line 12 for recovering the exhaust gas stream from the regeneration unit 7, and
- a line 34 for recovering the regenerated liquid compound A from the regeneration unit 7 and injecting it in the conversion unit 5.

The regeneration unit 7 typically comprises a catalyst bed with hydrogenation catalysts, such as CoMo or NiMO, wherein the H-deplenished H-donor compound, being the H-deplenished liquid solvent or the H-deplenished liquid compound A, is regenerated by being hydrogenated thanks to the regeneration gas from the line 13.

In the regeneration unit 7, the regeneration of the H-deplenished liquid compound A is performed thanks to the regeneration gas fed by the line 13, thereby resulting in the formation of the regenerated liquid compound A and the exhaust gas stream.

The separation unit 30 is typically a distillation unit, but can be any unit able to separate two or more liquids.

The following examples provide another illustration of the invention without providing any limitation.

**Examples**

Example 1: The liquid solvent is Dowtherm-A, the H-donor compound is tetralin

Sulphur deposits are firstly dissolved by Dowtherm-A (mixture of aromatic compounds biphenyl and biphenyl oxide, Dow Chemical Company) to form the liquid sulphur rich solvent. The total amount of dissolved sulphur in the liquid sulphur rich solvent is measured by using a combustion analysis. The combustion analysis indicates that the total amount of dissolved sulphur is equal to 4.97 $\pm$ 0.09 (gS/100g of sulphur rich solvent).

The liquid sulphur rich solvent and tetralin are then introduced into the conversion unit. Tetralin is used as the H-donor compound, and the tetralin concentration is 1.1 (molar equivalent, i.e. tetralin was added 10% more than stoichiometric requirement to convert all dissolved elemental sulphur to H2S). The conversion of dissolved sulphur into $H_2S$ is performed at 300°C, during 4 hours, while the pressure is monitored and recorded over the course of the reaction.

The composition of the gas produced by GC analysis clearly indicates a high concentration of $H_2S$ (85-97 mol%) and a sulphur conversion equal to 94%. The sulphur conversion is calculated according to the following formula:

$$Sulphur\ Conversion = 100\% - \left(\left(\frac{mass\ of\ S_8\ left\ in\ liquid - mass\ of\ sulphur\ in\ virgin\ liquid\ solvent}{mass\ of\ dissolved\ sulphur}\right) * 100\%\right)$$

Example 2: The liquid solvent is Solvesso 200, the H-donor compound is tetralin

The same experiment as in Example 1 is performed except that the liquid solvent is Solvesso 200 (mixture of aromatic compounds, Imperial Oils Chemicals Division). The total amount of dissolved sulphur is equal to 5.66 ± 0.54 (gS/100g of sulphur rich solvent).

The composition of the gas produced by GC analysis clearly indicates a sulphur conversion equal to 97.4 ± 0.1%.

Example 3: The liquid solvent is Solvesso 200, the H-donor compound is tetralin, effect of the conversion reaction time

Same experiments as in Example 2 are performed, except that the conversion of dissolved sulphur into $H_2S$ is performed during 10 seconds, 0.5 and 1 hour.

The composition of the gas produced is analysed by GC analysis and the sulphur conversion is calculated. The results are indicated in the Table 1

Table 1: Effect of the conversion reaction time on the sulphur conversion

| Conversion Reaction time | Sulphur conversion (%) |
|---|---|
| 4 hours(example 2) | 97.4 ± 0.1 |
| 1 hour | 96.6 ± 0.1 |
| 0.5 hour | 95.1 ± 0.1 |
| 10 seconds | 93.1 ± 0.1 |

These results show that the conversion of dissolved sulphur into $H_2S$ by using tetralin is performed efficiently from 93.1 % to 97.4% and can be considered instantaneous.

Example 4: The liquid solvent is Solvesso 200, the H-donor compound is tetralin, effect of the conversion reaction temperature

The same experiment as in Example 3 is performed, except that the conversion reaction time is 0.5 hour and is performed at 250°C.

The composition of the gas produced is analysed by GC analysis and the sulphur conversion is calculated. The results are indicated in the Table 2

Table 2: Effect of the conversion reaction temperature on the sulphur conversion

| Conversion reaction temperature (°C) | Sulphur conversion (%) |
|---|---|
| 300 (example 3) | 95.1 ± 0.1 |
| 250 | 89.4± 0.2 |

These results show that the conversion of dissolved sulphur to $H_2S$ by using tetralin is increased with the temperature.

Example 5: The liquid solvent is Solvesso 200, the H-donor compound is tetralin, effect of tetralin concentration

The same experiment as in Example 3 is performed, except that the conversion reaction time is 1 hour and tetralin concentration is 0.8.

The composition of the gas produced is analysed by GC analysis and the sulphur conversion is calculated. The results are indicated in the Table 3.

Table 3. Effect of the different ratios of liquid sulphur rich solvent over tetralin on the sulphur conversion

| Tetralin Concentration (Molar equivalent) | Sulphur conversion (%) |
|---|---|
| 1.1 (example 3) | 96.6 ± 0.1 |
| 0.8 | 94.1 ± 0.1 |

These results show that the conversion of dissolved sulphur to $H_2S$ by using tetralin increases with the amount of tetralin injected into the conversion unit.

These examples clearly show that sulphur dissolved in a solvent can be converted into $H_2S$ at high rates by using a H-donor compound, which means that a sulphur deposit from a well can be efficiently removed by dissolving all or part of the sulphur deposit in a liquid solvent and by converting the dissolved sulphur into $H_2S$ with a H-donor compound.

Example 6: The liquid solvent is Solvesso 200, no H-donor compound (tetralin) is added

The same experiment as in Example 2 is performed except that no H-donor compound was added into the liquid solvent; Solvesso 200.

The results for the experiment conducted with no tetralin at T = 300°C for 1 hour indicate that the conversion of elemental sulphur to H2S decreased (88.5 ± 0.1 %) without any tetralin; interestingly, the difference between 1.1 molar equivalent of tetralin and no added tetralin was only minor (~8%).

The results indicate that the solvent, Solvesso 200, has a significant concentration of suitable H-donors and can promote the reaction of elemental sulphur to hydrogen sulphide.

**Claims**

1.   A method for removing a sulphur deposit from a well (1) in which a gas is flowing, comprising the following steps:

a) injecting a liquid solvent in said well (1) thereby dissolving all or part of the sulphur deposit in said liquid solvent, and forming a well output (2) that comprises the gas from the well (1) and a liquid sulphur rich solvent,
b) separating the well output (2) into a gas stream and a liquid sulphur rich solvent stream in a gas/liquid separation unit (3) and recovering said gas stream in a line (14) and said liquid sulphur rich solvent stream in a line (4),
c) introducing the liquid sulphur rich solvent stream from line (4) into a conversion unit (5) and performing conversion of dissolved sulphur into $H_2S$ by reaction under appropriate conditions with a H-donor compound, said H-donor compound being the liquid solvent, a liquid compound A which is injected into the conversion unit (5), or both, thereby resulting in the formation of a liquid H-deplenished H-donor compound, and
d) recovering a $H_2S$ gas stream in a line (11) and a liquid flow in a line (6) from the conversion unit (5).

2.   The method according to claim 1, wherein the H-donor compound is the liquid solvent, said method further comprising the following steps:

e) contacting the liquid flow from line (6) with a regeneration gas in a regeneration unit (7) for performing regeneration of the H-deplenished liquid solvent, thereby resulting in the formation of a regenerated liquid solvent and an exhaust gas,
f) recovering the exhaust gas stream in a line (12),
g) recovering the regenerated liquid solvent in a line (8), and
h) reinjecting the regenerated liquid solvent in the well (1).

3.   The method according to claim 1, wherein the H-donor compound is the liquid compound A, said method further comprising the following steps:

i1) injecting in a separation unit (30) the liquid flow from line (6) which comprises a H-deplenished liquid compound A and the liquid solvent and separating the H-deplenished liquid compound A from the liquid solvent,

i2) recovering the liquid solvent in a line (32) and injecting it in the well (1), and

i3) recovering the H-deplenished liquid compound A in a line (31).

4. The method according to claim 1, wherein the H-donor compound is both the liquid solvent and the liquid compound A, said method further comprising the following steps:

i4) injecting into a separation unit (30) the liquid flow from line (6) which comprises a H-deplenished liquid compound A and a H-deplenished liquid solvent and separating the H-deplenished liquid compound A from the H-deplenished liquid solvent,

i5) recovering the H-deplenished liquid solvent in a line (32) and injecting it in the well (1), and

i6) recovering the H-deplenished liquid compound A in a line (31).

5. The method according to claim 3 or 4, said method further comprising the following steps:

j) contacting the H-deplenished liquid compound A recovered in a line (31) at step i3) or i6) with a regeneration gas in a regeneration unit (7) and performing regeneration of the liquid compound A, thereby resulting in the formation of a regenerated liquid compound A and an exhaust gas,

k) recovering the exhaust gas stream in a line (12), and

1) recovering the regenerated liquid compound A in a line (34) and injecting it in the conversion unit (5).

6. The method according to any one of claims 1 to 5, wherein the injection of the liquid solvent in the well (1) is performed continuously or sequentially.

7. The method according to any one of claims 1 to 6, wherein the gas flowing in the well (1) contains sulphur contaminants, and wherein the amount of sulphur contaminants is less than 10 g/Sm$^3$, in particular less than 5 g/Sm$^3$ and more particularly less than 2 g/Sm$^3$.

8. The method according to any one of claims 1 to 7, wherein the rate of the conversion reaction of step c) is from 10% to 100%, in particular from 90% to 99.5% and more particularly from 95% to 99%.

9. A method for recovering elemental sulphur from a gas flowing in a well (1) and from a sulphur deposit from the well (1) comprising the steps according to claim 1 and the following steps:

m) separating, in an AGR unit (15), the gas stream exiting the gas/liquid separation unit (3), recovered in the line (14), into a sweet hydrocarbon gas stream, recovered in a line (24), and an acid gas stream comprising H$_2$S, recovered in a line (16),

n) injecting the acid gas stream comprising H$_2$S from line (16) in the Claus unit (17) to convert H$_2$S into elemental sulphur and to produce a tail gas stream comprising sulphur compounds recovered in a line (19),

o) injecting into a TGT unit (20) the H$_2$S gas stream recovered in the line (11), the tail gas stream comprising sulphur compounds from line (19) to produce an enriched sulphur compounds gas stream comprising mainly H$_2$S and a treated tail gas stream,

p) recovering said treated tail gas stream in a line (21) and said enriched sulphur compounds gas stream in a line (33) and recycling it in the Claus unit (17) to convert H$_2$S into elemental sulphur, and

q) recovering the elemental sulphur produced in steps n) and p) in a line (18).

10. A method for recovering elemental sulphur from a gas flowing in a well (1) and from a sulphur deposit from the well (1) and for producing light hydrocarbon gas stream and light hydrocarbon cuts from said gas, comprising the steps according to claim 9 and the following steps:

r) dehydrating and separating the sweet hydrocarbon gas stream recovered in line (24) into a light hydrocarbon gas stream and light hydrocarbon cuts, and

s) recovering separately the light hydrocarbon gas stream and the light hydrocarbon cuts respectively in a line (28) and a line (29).

11. The method according to any one of claims 2, 5 to 9, wherein the regeneration gas is chosen from :

- a part of the reducing gas produced by the reducing gas generator of the TGT unit (20),
- a part of the tail gas recovered in line (19),
- a part of the treated tail gas recovered in line (21),
- or a mixture thereof.

12. A device for carrying out the method according to claim 1, said device comprising:

- a gas/liquid separation unit (3) for separating the well output (2) into a gas stream recovered in line (14) and a liquid sulphur rich solvent stream recovered in line (4),
- a conversion unit (5) fed by line (4) for performing conversion of dissolved sulphur into $H_2S$ by reaction under appropriate conditions with a H-donor compound, said H-donor compound being the liquid solvent, a liquid compound A which is injected into the conversion unit (5) by a line (34), or both, thereby resulting in the formation of a liquid H-deplenished H-donor compound,
- a line (11) for recovering a $H_2S$ gas stream from the conversion unit (5),
- a line (6) for recovering a liquid flow from the conversion unit (5), and
- a regeneration unit (7) fed by the line (6) or
- a separation unit (30) fed by the line (6) prior to a regeneration unit (7), **characterized in that** the regeneration unit (7) is fed by a line (13) comprising a regeneration gas for performing the regeneration of the liquid H-deplenished H-donor compound, thereby resulting in the formation of a regenerated liquid H-donor compound and an exhaust gas stream.

13. The device according to claim 12 for carrying out the method according to claim 2, wherein the H-donor compound is the liquid solvent, said device further comprising:

- a line (12) for recovering the exhaust gas stream from the regeneration unit (7),
- a line (8) for recovering the regenerated liquid solvent from the regeneration unit (7), and
- a pump (9) fed by the line (8) for pressurizing the regenerated liquid solvent prior to its reinjection in the well (1) by a line (10).

14. The device according to claim 12 for carrying out the method according to claim 5, wherein the H-donor compound is the liquid compound A, said device further comprising:

- the separation unit (30) fed by line (6) comprising the liquid flow which comprises a H-deplenished liquid compound A and the liquid solvent, for separating the H-deplenished liquid compound A from the liquid solvent,
- a line (32) for recovering the liquid solvent from the separation unit (30),
- a pump (9) fed by the line (32) for pressurizing the liquid solvent prior to its reinjection in the well (1) by a line (10),
- a line (31) for recovering the H-deplenished liquid compound A from the separation unit (30) and feeding the regeneration unit (7),
- a line (12) for recovering the exhaust gas stream from the regeneration unit (7), and
- the line (34) for recovering the regenerated liquid compound A from the regeneration unit (7) and reinjecting it in the conversion unit (5).

15. The device according to claim 12 for carrying out the method according to claim 5, wherein the H-donor compound is both the liquid solvent and the liquid compound A, said device further comprising:

- the separation unit (30) fed by the line (6) comprising the liquid flow which comprises a H-deplenished liquid compound A and the H-deplenished liquid solvent, for separating the H-deplenished liquid compound A from the H-deplenished liquid solvent,
- a line (32) for recovering the H-deplenished liquid solvent from the separation unit (30),
- a pump (9) fed by line (32) for pressurizing the H-deplenished liquid solvent prior to its reinjection in the well (1) by a line (10),
- a line (31) for recovering the H-deplenished liquid compound A from the separation unit (30) and feeding the regeneration unit (7),
- a line (12) for recovering the exhaust gas stream from the regeneration unit (7), and
- the line (34) for recovering the regenerated liquid compound A from the regeneration unit (7) and reinjecting it in the conversion unit (5).

16. A device for carrying out the method according to claim 9, said device comprising the units of the device according to claim 12 and further comprising:

- an AGR unit (15) fed by the line (14) comprising the gas stream for separating it into a sweet hydrocarbon gas stream recovered in a line (24) and an acid gas stream comprising $H_2S$ recovered in a line (16),
- a Claus unit (17) fed by the line (16) and a line (33), said Claus unit (17) having an exit line (18) for recovering an elemental sulphur, and an another exit line (19) for recovering a tail gas stream comprising sulphur compounds,
- a TGT unit (20) fed by the line (19) and having an exit line (21) for recovering a treated tail gas stream and the line (33) to recover an enriched sulphur compounds gas stream comprising mainly $H_2S$, said TGT unit (20) comprising a reducing gas generator and, in the direction of the gas stream flow, an hydrogenation reactor, a quench tower and an absorber, wherein:

• a reducing gas is produced by the reducing gas generator for feeding the hydrogenation reactor of the TGT unit (20),
• the hydrogenation reactor converts the sulphur compounds of the tail gas stream into $H_2S$,
• the quench tower, fed by the gas stream from the hydrogenation reactor and the $H_2S$ gas stream of line (11), produces a cooled tail gas stream comprising sulphur compounds, mainly $H_2S$,
• in the absorber, the sulphur compounds, mainly $H_2S$, are separated from the other constituents of the cooled tail gas stream thereby producing the treated tail gas stream, recovered in the line (21), and the enriched sulphur compounds gas stream, comprising mainly $H_2S$, recovered in the line (33) to be recycled upstream to the Claus unit (17),

**17.** The device according to claim 16 for carrying out the method according to claim 10, said device further comprising:

- a dehydration unit (25) fed by the line (24) for dehydrating the sweet hydrocarbon gas stream, and connected to a line (26) to recover a dehydrated sweet hydrocarbon gas stream,
- a fractionation unit (27) fed by the line (26) for separating the dehydrated sweet hydrocarbon gas stream into a light hydrocarbon gas stream and a light hydrocarbon cuts recovered respectively in a line (28) and in a line (29).

**18.** The device according to claim 16 for carrying out the method according to claim 11, wherein the line (13) is connected to the line (19) to recover a part of the tail gas stream, and/or to the reducing gas generator to recover a part of the reducing gas, and/or to the line (21) to recover a part of the treated tail gas stream, to feed the regeneration unit (7).

**Patentansprüche**

**1.** Verfahren zum Entfernen eines Schwefelniederschlags aus einem Bohrloch (1), in welchem ein Gas fließt, umfassend die folgenden Schritte:

a) Injizieren eines flüssigen Lösungsmittels in das Bohrloch (1), welches dabei den gesamten oder einen Teil des Schwefelniederschlags im flüssigen Lösungsmittel löst, und Bilden eines Bohrlochausstoßes (2), umfassend das Gas von dem Bohrloch (1) und ein flüssiges schwefelreiches Lösungsmittel,
b) Trennen des Bohrlochausstoßes (2) in einen Gasstrom und einen flüssigen schwefelreichen Lösungsmittelstrom in einer Gas/Flüssigkeits-Trennungseinheit (3) und Gewinnen des Gasstrom in einer Linie (14) und des flüssigen schwefelreichen Lösungsmittelstroms in einer Linie (4),
c) Einführen des flüssigen schwefelreichen Lösungsmittelstroms von Linie (4) in eine Umwandlungseinheit (5), und Durchführen der Umwandlung von gelöstem Schwefel in $H_2S$ durch Reaktion unter geeigneten Bedingungen mit einer H-Donorverbindung, wobei die H-Donorverbindung das flüssige Lösungsmittel, eine flüssige Verbindung A, welche in die Umwandlungseinheit (5) injiziert wird, oder beides ist, was dadurch zur Bildung einer flüssigen H-verringerten H-Donorverbindung führt, und
d) Gewinnen eines $H_2S$-Gasstroms in einer Linie (11) und eines flüssigen Flusses in einer Linie (6) von der Umwandlungseinheit (5).

**2.** Verfahren gemäß Anspruch 1, wobei die H-Donorverbindung das flüssige Lösungsmittel ist, wobei das Verfahren weiter die folgenden Schritte umfasst:

e) Inkontaktbringen des flüssigen Flusses von Linie (6) mit einem Regenerationsgas in einer Regenerationseinheit (7) zur Durchführung einer Regeneration des H-verringerten flüssigen Lösungsmittels, was zur Bildung eines regenerierten flüssigen Lösungsmittels und eines Abgases führt,

f) Gewinnen des Abgasstroms in einer Linie (12),

g) Gewinnen des regenerierten flüssigen Lösungsmittels in einer Linie (8), und

h) Wiederinjizieren des regenerierten flüssigen Lösungsmittels in das Bohrloch (1).

3. Verfahren gemäß Anspruch 1, wobei die H-Donorverbindung die flüssige Verbindung A ist, wobei das Verfahren weiter die folgenden Schritte umfasst:

i1) Injizieren in eine Trennungseinheit (30) den flüssigen Fluss von Linie (6), welcher eine H-verringerte flüssige Verbindung A und das flüssige Lösungsmittel umfasst, und Trennen der H-verringerten flüssigen Verbindung A vom flüssigen Lösungsmittel,

i2) Gewinnen des flüssigen Lösungsmittels in einer Linie (32) und dessen Injizieren in das Bohrloch (1), und

i3) Gewinnen der H-verringerten flüssigen Verbindung A in einer Linie (31).

4. Verfahren gemäß Anspruch 1, wobei die H-Donorverbindung das flüssige Lösungsmittel und die flüssige Verbindung A ist, wobei das Verfahren weiter die folgenden Schritte umfasst:

i4) Injizieren in eine Trennungseinheit (30) den flüssigen Fluss von Linie (6), welcher eine H-verringerte flüssige Verbindung A und ein H-verringertes flüssiges Lösungsmittel umfasst, und Trennen der H-verringerten flüssigen Verbindung A vom H-verringerten flüssigen Lösungsmittel,

i5) Gewinnen des H-verringerten flüssigen Lösungsmittels in einer Linie (32), und dessen Injizieren in das Bohrloch (1), und

i6) Gewinnen der H-verringerten flüssigen Verbindung A in einer Linie (31).

5. Verfahren gemäß Anspruch 3 oder 4, wobei das Verfahren weiter die folgenden Schritte umfasst::

j) Inkontaktbringen der H-verringerten flüssigen Verbindung A, welche in einer Linie (31) in Schritt i3) oder i6) gewonnen wurde, mit einem Regenerationsgas in einer Regenerationseinheit (7) und Durchführen einer Regeneration der flüssigen Verbindung A, was zur Bildung einer regenerierten flüssigen Verbindung A und eines Abgases führt,

k) Gewinnen des Abgasstroms in einer Linie (12), und

l) Gewinnen der regenerierten flüssigen Verbindung A in einer Linie (34), und dessen Injizieren in die Umwandlungseinheit (5).

6. Verfahren gemäß einem der Ansprüche 1 bis 5, wobei die Injektion des flüssigen Lösungsmittels in das Bohrloch (1) kontinuierlich oder nacheinander durchgeführt wird.

7. Verfahren gemäß einem der Ansprüche 1 bis 6, wobei das Gas, welches in dem Bohrloch (1) fließt, Schwefelkontaminanten enthält, und wobei die Menge von Schwefelkontaminanten weniger als 10 g/Sm$^3$ beträgt, insbesondere weniger als 5 g/Sm$^3$ und stärker bevorzugt weniger als 2 g/Sm$^3$.

8. Verfahren gemäß einem der Ansprüche 1 bis 7, wobei die Rate der Umwandlungsreaktion von Schritt c) von 10 % bis 100 % beträgt, insbesondere von 90 % bis 99,5 % und stärker bevorzugt von 95 % bis 99 %.

9. Verfahren zum Gewinnen von elementarem Schwefel aus einem Gas, welches in einem Bohrloch (1) fließt, und von einem Schwefelniederschlag aus dem Bohrloch (1), umfassend die Schritte gemäß Anspruch 1 und die folgenden Schritte:

m) in einer AGR-Einheit (15) Trennen des Gasstroms, welcher die Gas/Flüssigkeits-Trennungseinheit (3) verlässt, gewonnen in der Linie (14), in einen Kohlenwasserstoff-Süßgasstrom, gewonnen in einer Linie (24), und einen Sauergasstrom umfassend $H_2S$, gewonnen in einer Linie (16),

n) Injizieren des Sauergasstroms umfassend $H_2S$ von Linie (16) in die Claus-Einheit (17) zum Umwandeln von $H_2S$ in elementaren Schwefel und zum Herstellen eines Restgasstroms umfassend Schwefelverbindungen, welche in einer Linie (19) gewonnen werden,

o) In eine TGT-Einheit (20) Injizieren des $H_2S$-Gasstroms, welcher in der Linie (11) gewonnen wurde, wobei der Restgasstrom Schwefelverbindungen von Linie (19) umfasst, um einen angereicherten Schwefelverbindungs-Gasstrom umfassend hauptsächlich $H_2S$ und einen behandelten Restgasstrom herzustellen,

p) Gewinnen des behandelten Restgasstroms in einer Linie (21) und des angereicherten Schwefelverbindungs-Gasstroms in einer Linie (33), und dessen Recyclen in der Claus-Einheit (17), um $H_2S$ in elementaren Schwefel umzuwandeln, und

q) Gewinnen des elementaren Schwefels, welcher in den Schritten n) und p) hergestellt wurde, in einer Linie (18).

10. Verfahren zum Gewinnen von elementarem Schwefel aus einem Gas, welches in einem Bohrloch (1) fließt, und von einem Schwefelniederschlag von dem Bohrloch (1), und zum Herstellen von einem Leichtkohlenwasserstoff-Gasstrom und Leichtkohlenwasserstoff-Fraktionen aus dem Gas, umfassend die Schritte gemäß Anspruch 9 und die folgenden Schritte:

r) Dehydrieren und Trennen des Kohlenwasserstoff-Süßgasstroms, welcher in Linie (24) gewonnen wurde, in ein Leichtkohlenwasserstoff-Gasstrom und Leichtkohlenwasserstoff-Fraktionen, und

s) getrenntes Gewinnen des Leichtkohlenwasserstoff-Gasstroms und der Leichtkohlenwasserstoff-Fraktionen jeweils in einer Linie (28) und einer Linie (29).

11. Verfahren gemäß einem der Ansprüche 2, 5 bis 9, wobei das Regenerationsgas gewählt wird aus:

- einem Teil des reduzierenden Gases, welches durch den Generator für reduzierendes Gas der TGT-Einheit (20) hergestellt wurde,
- einem Teil des Restgases, welches in Linie (19) gewonnen wurde,
- einem Teil des behandelten Restgases, welches in Linie (21) gewonnen wurde,
- oder einer Mischung davon.

12. Vorrichtung zum Ausführen des Verfahrens gemäß Anspruch 1, wobei die Vorrichtung umfasst:

- eine Gas/Flüssigkeits-Trennungseinheit (3) zum Trennen des Bohrlochausstoßes (2) in einen Gasstrom, welcher in Linie (14) gewonnen wird, und einen flüssigen schwefelreichen Lösungsmittelstrom, welcher in Linie (4) gewonnen wird,
- eine Umwandlungseinheit (5), welche durch Linie (4) gefüttert wird, zur Durchführung einer Umwandlung von gelöstem Schwefel in $H_2S$ durch Reaktion unter geeigneten Bedingungen mit einer H-Donorverbindung, wobei die H-Donorverbindung das flüssige Lösungsmittel, eine flüssige Verbindung A, welche in die Umwandlungseinheit (5) durch eine Linie (34) injiziert wird, oder beides ist, was dadurch zur Bildung einer flüssigen H-verringerten H-Donorverbindung führt,
- eine Linie (11) zum Gewinnen eines $H_2S$-Gasstroms von der Umwandlungseinheit (5), und
- eine Linie (6) zum Gewinnen eines flüssigen Flusses von der Umwandlungseinheit (5), und
- eine Regenerationseinheit (7), welche durch die Linie (6) gefüttert wird, oder
- eine Trennungseinheit (30), welche durch die Linie (6) gefüttert wird, vor einer Regenerationseinheit (7)

**dadurch gekennzeichnet, dass** die Regenerationseinheit (7) durch eine Linie (13) gefüttert wird, umfassend ein Regenerationsgas zur Durchführung der Regeneration der flüssigen H-verringerten H-Donorverbindung, was dadurch zur Bildung einer regenerierten flüssigen H-Donorverbindung und eines Abgasstroms führt.

13. Vorrichtung gemäß Anspruch 12 zum Ausführen des Verfahrens gemäß Anspruch 2, wobei die H-Donorverbindung das flüssige Lösungsmittel ist, wobei die Vorrichtung weiter umfasst:

- eine Linie (12) zum Gewinnen des Abgasstroms von der Regenerationseinheit (7),
- eine Linie (8) zum Gewinnen des regenerierten flüssigen Lösungsmittels von der Regenerationseinheit (7), und
- eine Pumpe (9) gefüttert durch die Linie (8) zum Unterdrucksetzen des regeneriertes flüssigen Lösungsmittels vor seiner Wiederinjizierung in das Bohrloch (1) durch eine Linie (10).

14. Vorrichtung gemäß Anspruch 12 zum Ausführen des Verfahrens gemäß Anspruch 5, wobei die H-Donorverbindung das flüssige Lösungsmittel ist, wobei die Vorrichtung weiter umfasst:

- eine Trennungseinheit (30) gefüttert durch die Linie (6) umfassend den flüssigen Fluss, welcher eine H-verringerte flüssige Verbindung A und das flüssige Lösungsmittel umfasst, zum Trennen der H-verringerten flüssigen Verbindung A vom flüssigen Lösungsmittel,
- eine Linie (32) zum Gewinnen des flüssigen Lösungsmittels von der Trennungseinheit (30),
- eine Pumpe (9) gefüttert durch Linie (32) zum Unterdrucksetzen des flüssigen Lösungsmittels vor seiner Wiederinjizierung in das Bohrloch (1) durch eine Linie (10),

- eine Linie (31) zum Gewinnen der H-verringerten flüssigen Verbindung A von der Trennungseinheit (30) und Füttern der Regenerationseinheit (7),
- eine Linie (12) zum Gewinnen des Abgasstroms von der Regenerationseinheit (7), und
- die Linie (34) zum Gewinnen der regenerierten flüssigen Verbindung A von der Regenerationseinheit (7), und dessen Wiederinjizieren in die Umwandlungseinheit (5).

15. Vorrichtung gemäß Anspruch 12 zum Ausführen des Verfahrens gemäß Anspruch 5, wobei die H-Donorverbindung das flüssige Lösungsmittel und die flüssige Verbindung A ist, wobei die Vorrichtung weiter umfasst:

- eine Trennungseinheit (30) gefüttert durch die Linie (6) umfassend den flüssigen Fluss, welcher eine H-verringerte flüssige Verbindung A und das H-verringerte flüssige Lösungsmittel umfasst, zum Trennen der H-verringerten flüssigen Verbindung A vom H-verringerten flüssigen Lösungsmittel,
- eine Linie (32) zum Gewinnen des H-verringerten flüssigen Lösungsmittels von der Trennungseinheit (30),
- eine Pumpe (9) gefüttert durch Linie (32) zum Unterdrucksetzen des H-verringerten flüssigen Lösungsmittels vor seiner Wiederinjizierung in das Bohrloch (1) durch eine Linie (10),
- eine Linie (31) zum Gewinnen der H-verringerten flüssigen Verbindung A von der Trennungseinheit (30) und Füttern der Regenerationseinheit (7),
- eine Linie (12) zum Gewinnen des Abgasstroms von der Regenerationseinheit (7), und
- die Linie (34) zum Gewinnen der regenerierten flüssigen Verbindung A von der Regenerationseinheit (7), und dessen Wiederinjizieren in die Umwandlungseinheit (5).

16. Vorrichtung zum Ausführen des Verfahrens gemäß Anspruch 9, wobei die Vorrichtung die Einheiten der Vorrichtung gemäß Anspruch 12 umfasst und weiter umfasst:

- eine AGR-Einheit (15) gefüttert durch die Linie (14) umfassend den Gasstrom zu dessen Trennen in einen Kohlenwasserstoff-Süßgasstrom gewonnen in einer Linie (24) und einen Sauergasstrom umfassend $H_2S$ gewonnen in einer Linie (16),
- eine Claus-Einheit (17) gefüttert durch die Linie (16) und eine Linie (33), wobei die Claus-Einheit (17) eine Ausgangslinie (18) zum Gewinnen eines elementaren Schwefels und eine andere Ausgangslinie (19) zum Gewinnen eines Restgasstroms umfassend Schwefelverbindungen aufweist,
- eine TGT-Einheit (20) gefüttert durch die Linie (19), und welche eine Ausgangslinie (21) zum Gewinnen eines behandelten Restgasstroms und die Linie (33) zum Gewinnen eines angereicherten Schwefelverbindungs-Gasstroms umfassend hauptsächlich $H_2S$ aufweist, wobei die TGT-Einheit (20) einen Generator für reduzierendes Gas und in Richtung des Gasstromflusses eine Hydrierungsreaktor, einen Quenchturm und einen Absorber umfasst, wobei:

• ein reduzierendes Gas durch den Generator für reduzierendes Gas hergestellt wird zum Füttern des Hydrierungsreaktors der TGT-Einheit (20),
• der Hydrierungsreaktor die Schwefelverbindungen des Restgasstroms in $H_2S$ umwandelt,
• der Quenchturm, gefüttert durch den Gasstrom von dem Hydrierungsreaktor und den $H_2S$-Gasstrom von Linie (11), einen abgekühlten Restgasstrom umfassend Schwefelverbindungen herstellt, hauptsächlich $H_2S$,
• in dem Absorber die Schwefelverbindungen, hauptsächlich $H_2S$, von den anderen Bestandteilen des abgekühlten Restgasstrom abgetrennt werden, wodurch der behandelte Restgasstrom, gewonnen in der Linie (21), und der angereicherte Schwefelverbindungs-Gasstrom, umfassend hauptsächlich $H_2S$, gewonnen in der Linie (33) hergestellt wird, welcher stromaufwärts zur Claus-Einheit (17) recycelt wird.

17. Vorrichtung gemäß Anspruch 16 zum Ausführen des Verfahrens gemäß Anspruch 10, wobei die Vorrichtung weiter umfasst:

- eine Dehydrierungseinheit (25) gefüttert durch die Linie (24) zum Dehydrieren des Kohlenwasserstoff-Süßgasstroms und verbunden mit einer Linie (26) zum Gewinnen eines dehydrieren Kohlenwasserstoff-Süßgasstroms,
- eine Fraktionierungseinheit (27) gefüttert durch die Linie (26) zum Trennen des dehydrierten Kohlenwasserstoff-Süßgasstroms in einen Leichtkohlenwasserstoff-Gasstrom und Leichtkohlenwasserstoff-Fraktionen gewonnen jeweils in einer Linie (28) und in einer Linie (29).

18. Vorrichtung gemäß Anspruch 16 zum Ausführen des Verfahrens gemäß Anspruch 11, wobei die Linie (13) mit der Linie (19) verbunden ist, um einen Teil des Restgasstroms zu gewinnen, und/oder mit dem Generator für reduzierendes Gas, um einen Teil des reduzierenden Gases zu gewinnen, und/oder mit Linie (21), um einen Teil des behandelten Restgasstroms zu gewinnen, um die Regenerationseinheit (7) zu füttern.

## Revendications

1. Procédé d'élimination d'un dépôt de soufre dans un puits (1) dans lequel un gaz s'écoule, comprenant les étapes suivantes :

   a) injection d'un solvant liquide dans ledit puits (1) en dissolvant ainsi tout ou une partie du dépôt de soufre dans ledit solvant liquide, et formant un produit de sortie du puits (2) qui comprend le gaz du puits (1) et un solvant liquide riche en soufre,
   b) séparation du produit de sortie du puits (2) en un flux de gaz et en un flux liquide de solvant riche en soufre dans une unité de séparation gaz/liquide (3) et récupération dudit flux de gaz dans une conduite (14) et dudit flux liquide de solvant riche en soufre dans une conduite (4),
   c) introduction du flux liquide de solvant riche en soufre à partir de la conduite (4) dans une unité de conversion (5) et réalisation de la conversion du soufre dissous en $H_2S$ par réaction dans des conditions appropriées avec un composé H-donneur, ledit composé H-donneur étant le solvant liquide, un composé liquide A qui est injecté dans l'unité de conversion (5), ou les deux, en causant ainsi la formation d'un composé liquide H-donneur appauvri en H, et
   d) récupération d'un courant de gaz $H_2S$ dans une conduite (11) et d'un écoulement liquide dans une conduite (6) à partir de l'unité de conversion (5).

2. Procédé selon la revendication 1, dans lequel le composé H-donneur est le solvant liquide, ledit procédé comprenant en outre les étapes suivantes :

   e) mise en contact de l'écoulement liquide de la conduite (6) avec un gaz de régénération dans une unité de régénération (7) pour réaliser la régénération du solvant liquide appauvri en H, en causant ainsi la formation d'un solvant liquide régénéré et d'un gaz d'échappement,
   f) récupération du flux de gaz d'échappement dans une conduite (12),
   g) récupération du solvant liquide régénéré dans une conduite (8), et
   h) réinjection du solvant liquide régénéré dans le puits (1).

3. Procédé selon la revendication 1, dans lequel le composé H-donneur est le composé liquide A, ledit procédé comprenant en outre les étapes suivantes :

   i1) injection dans une unité de séparation (30) de l'écoulement liquide de la conduite (6) qui comprend un composé liquide A appauvri en H et le solvant liquide et séparation du composé liquide A appauvri en H du solvant liquide,
   i2) récupération du solvant liquide dans une conduite (32) et injection de celui-ci dans le puits (1), et
   i3) récupération du composé liquide A appauvri en H dans une conduite (31).

4. Procédé selon la revendication 1, dans lequel le composé H-donneur est à la fois le solvant liquide et le composé liquide A, ledit procédé comprenant en outre les étapes suivantes :

   i4) injection dans une unité de séparation (30) de l'écoulement liquide de la conduite (6) qui comprend un composé liquide A appauvri en H et un solvant liquide appauvri en H et séparation du composé liquide A appauvri en H du solvant liquide appauvri en H,
   i5) récupération du solvant liquide appauvri en H dans une conduite (32) et injection de celui-ci dans le puits (1), et
   i6) récupération du composé liquide A appauvri en H dans une conduite (31).

5. Procédé selon la revendication 3 ou 4, ledit procédé comprenant en outre les étapes suivantes :

   j) mise en contact du composé liquide A appauvri en H dans une conduite (31) à l'étape i3) ou i6) avec un gaz de régénération dans une unité de régénération (7) et réalisation de la régénération du composé liquide A, en causant ainsi la formation d'un composé liquide A régénéré et d'un gaz d'échappement,
   k) récupération du flux de gaz d'échappement dans une conduite (12), et

1) récupération du composé liquide A régénéré dans une conduite (34) et l'injection de celui-ci dans l'unité de conversion (5).

6. Procédé selon l'une quelconque des revendications 1 à 5, dans lequel l'injection du solvant liquide dans le puits (1) est effectuée en continue ou séquentiellement.

7. Procédé selon l'une quelconque des revendications 1 à 6, dans lequel le gaz s'écoulant dans le puits (1) contient des contaminants soufrés, et dans lequel la quantité de contaminants soufrés est inférieure à 10 g/Sm$^3$, en particulier inférieure à 5 g/Sm$^3$ et plus particulièrement inférieure à 2 g/Sm$^3$.

8. Procédé selon l'une quelconque des revendications 1 à 7, dans lequel le taux de la réaction de conversion à l'étape c) est de 10 % à 100 %, en particulier de 90 % à 99,5 % et plus particulièrement de 95 % à 99 %.

9. Procédé de récupération de soufre élémentaire à partir d'un gaz s'écoulant dans un puits (1) et à partir d'un dépôt de soufre du puits (1) comprenant les étapes selon la revendication 1 et les étapes suivantes :

   m) séparation, dans une unité AGR (15), du flux de gaz sortant de l'unité de séparation gaz/liquide (3), récupéré dans la conduite (14), en un flux de gaz d'hydrocarbure non corrosif, récupéré dans une conduite (24), et en un flux de gaz acide comprenant H$_2$S, récupéré dans une conduite (16),
   n) injection du flux de gaz acide comprenant H$_2$S de la conduite (16) dans l'unité Claus (17) pour convertir H$_2$S en soufre élémentaire et pour produire un flux de gaz de queue comprenant des composés soufrés récupérés dans une conduite (19),
   o) injection dans une unité TGT (20) du flux de gaz H$_2$S récupéré dans la conduite (11), le flux de gaz de queue comprenant des composés soufrés de la conduite (19) pour produire un flux de gaz enrichi en composés soufrés comprenant principalement H$_2$S et un flux de gaz de queue traité,
   p) récupération dudit flux de gaz de queue traité dans une conduite (21) et dudit flux de gaz enrichi en composés soufrés dans une conduite (33) et recyclage de ceux-ci dans l'unité Claus (17) pour convertir H$_2$S en soufre élémentaire, et
   q) récupération du soufre élémentaire produit aux étapes n) et p) dans une conduite (18).

10. Procédé de récupération de soufre élémentaire à partir d'un gaz s'écoulant dans un puits (1) et à partir d'un dépôt de soufre du puits (1) et de production de flux de gaz d'hydrocarbures légers et de coupes d'hydrocarbures légers à partir dudit gaz, comprenant les étapes selon la revendication 9 et les étapes suivantes :

   r) déshydratation et séparation du flux de gaz d'hydrocarbures non corrosifs dans la conduite (24) en un flux de gaz d'hydrocarbures légers et en coupes d'hydrocarbures légers, et
   s) récupération séparée du flux de gaz d'hydrocarbures légers et des coupes d'hydrocarbures légers respectivement dans une conduite (28) et une conduite (29).

11. Procédé selon l'une quelconque des revendications 2, 5 à 9, dans lequel le gaz de régénération est choisi parmi :

   ▪ une partie du gaz réducteur produit par le générateur de gaz réducteur de l'unité de traitement de gaz de queue TGT (20),
   ▪ une partie du gaz de queue récupéré dans la conduite (19),
   ▪ une partie du gaz de queue traité récupéré dans la conduite (21),
   ▪ ou un mélange de ceux-ci.

12. Dispositif pour mettre en oeuvre le procédé selon la revendication 1, ledit dispositif comprenant :

   - une unité de séparation gaz/liquide (3) pour la séparation des produits de sortie du puits (2) en un flux de gaz dans la conduite (14) et en un flux liquide de solvant riche en soufre dans la conduite (4),
   - une unité de conversion (5) alimentée par la conduite (4) pour la mise en oeuvre de la conversion du soufre dissous en H$_2$S par réaction dans des conditions appropriées avec un composé H-donneur, ledit composé H-donneur étant le solvant liquide, un composé liquide A qui est injecté dans l'unité de conversion (5) par une conduite (34), ou les deux, en causant ainsi la formation d'un composé H-donneur liquide appauvri en H,
   - une conduite (11) de récupération d'un flux de gaz H$_2$S à partir de l'unité de conversion (5),
   - une conduite (6) de récupération d'un écoulement liquide à partir de l'unité de conversion (5), et
   - une unité de régénération (7) alimentée par la conduite (6) ou

- une unité de séparation (30) alimentée par la conduite (6) avant une unité de régénération (7), **caractérisé en ce que** l'unité de régénération (7) est alimentée par une conduite (13) comprenant un gaz de régénération pour réaliser la régénération du composé H-donneur liquide appauvri en H, en causant ainsi la formation d'un composé H-donneur liquide régénéré et d'un flux de gaz d'échappement.

13. Dispositif selon la revendication 12 pour la mise en oeuvre du procédé selon la revendication 2, dans lequel le composé H-donneur est le solvant liquide, ledit dispositif comprenant en outre :

- une conduite (12) pour la récupération du flux de gaz d'échappement à partir de l'unité de régénération (7),
- une conduite (8) pour la récupération du solvant liquide régénéré à partir de l'unité de régénération (7), et
- une pompe (9) alimentée par la conduite (8) pour la mise sous pression du solvant liquide régénéré avant sa réinjection dans le puits (1) par une conduite (10).

14. Dispositif selon la revendication 12 pour la mise en oeuvre du procédé selon la revendication 5, dans lequel le composé H-donneur est le composé liquide A, ledit dispositif comprenant en outre :

- l'unité de séparation (30) alimentée par la conduite (6) comprenant l'écoulement liquide qui comprend un composant liquide A appauvri en H et le solvant liquide, pour la séparation du composant liquide A appauvri en H du solvant liquide,
- une conduite (32) pour la récupération du solvant liquide à partir de l'unité de séparation (30),
- une pompe (9) alimentée par la conduite (32) pour la mise sous pression du solvant liquide avant sa réinjection dans le puits (1) par une conduite (10),
- une conduite (31) pour la récupération du composé liquide A appauvri en H à partir de l'unité de séparation (30) et l'alimentation de l'unité de régénération (7),
- une conduite (12) pour la récupération du flux de gaz d'échappement à partir de l'unité de régénération (7), et
- la conduite (34) pour la récupération du composé liquide A régénéré à partir de l'unité de régénération (7) et réinjection de celui-ci dans l'unité de conversion (5).

15. Dispositif selon la revendication 12 pour la mise en oeuvre du procédé selon la revendication 5, dans lequel le composé H-donneur est à la fois le solvant liquide et le composé liquide A, ledit dispositif comprenant en outre :

- l'unité de séparation (30) alimentée par la conduite (6) comprenant l'écoulement liquide qui comprend un composant liquide A appauvri en H et le solvant liquide appauvri en H, pour la séparation du composant liquide A appauvri en H du solvant liquide appauvri en H,
- une conduite (32) pour la récupération du solvant liquide appauvri en H à partir de l'unité de séparation (30),
- une pompe (9) alimentée par la conduite (32) pour la mise sous pression du solvant liquide appauvri en H avant sa réinjection dans le puits (1) par une conduite (10),
- une conduite (31) pour la récupération du composé liquide A appauvri en H à partir de l'unité de séparation (30) et l'alimentation de l'unité de régénération (7),
- une conduite (12) pour la récupération du flux de gaz d'échappement à partir de l'unité de régénération (7), et
- la conduite (34) pour la récupération du composant liquide A régénéré à partir de l'unité de régénération (7) et la réinjection de celui-ci dans l'unité de conversion (5).

16. Dispositif pour la mise en oeuvre du procédé selon la revendication 9, ledit dispositif comprenant les unités du dispositif selon la revendication 12 et comprenant en outre :

- une unité AGR (15) alimentée par la conduite (14) comprenant le flux de gaz pour séparation de celui-ci en un flux de gaz d'hydrocarbures non corrosifs collecté dans une conduite (24) et en un flux de gaz acide comprenant $H_2S$ récupéré dans une conduite (16),
- une unité Claus (17) alimentée par la conduite (16) et une conduite (33), ladite unité Claus (17) ayant une conduite de sortie (18) pour la récupération d'un soufre élémentaire, et une autre conduite de sortie (19) pour la récupération d'un flux de gaz de queue comprenant des composés soufrés,
- une unité TGT (20) alimentée par la conduite (19) et ayant une conduite de sortie (21) pour la récupération d'un flux de gaz de queue traité et la conduite (33) pour récupérer un flux de gaz enrichi en composés soufrés comprenant principalement $H_2S$, ladite unité TGT (20) comprenant un générateur de gaz réducteur et, dans la direction d'écoulement du flux de gaz, un réacteur d'hydrogénation, une tour de trempe et un absorbeur, dans lequel :

• un gaz réducteur est produit par le générateur de gaz réducteur pour l'alimentation du réacteur d'hydrogénation de l'unité TGT (20),

• le réacteur d'hydrogénation convertit les composés soufrés du flux de gaz de queue en $H_2S$,

• la tour de trempe, alimentée par le flux de gaz du réacteur d'hydrogénation et le flux de gaz $H_2S$ de la conduite (11), produit un flux de gaz de queue refroidi comprenant des composés soufrés, principalement $H_2S$,

• dans l'absorbeur, les composés soufrés, principalement $H_2S$, sont séparés des autres constituants du flux de gaz de queue refroidi en produisant ainsi le flux de gaz de queue traité, récupérés dans la conduite (21), et le flux de gaz enrichi en composés soufrés, comprenant principalement $H_2S$, récupéré dans la conduite (33) pour être recyclé en amont vers l'unité Claus (17).

17. Dispositif selon la revendication 16 pour la mise en oeuvre du procédé selon la revendication 10, ledit dispositif comprenant en outre :

- une unité de déshydratation (25) alimentée par la conduite (24) pour la déshydratation du flux de gaz d'hydrocarbures non corrosifs, et reliée à une conduite (26) pour récupérer un flux de gaz d'hydrocarbures non corrosifs déshydratés,
- une unité de fractionnement (27) alimentée par la conduite (26) pour la séparation du flux de gaz d'hydrocarbures non corrosifs déshydratés en un flux de gaz d'hydrocarbures légers et en coupes d'hydrocarbures légers récupérés respectivement dans une conduite (28) et une conduite (29).

18. Dispositif selon la revendication 16 pour la mise en oeuvre du procédé selon la revendication 11, dans lequel la conduite (13) est reliée à la conduite (19) pour récupérer une partie du flux de gaz de queue, et/ou au générateur de gaz réducteur pour récupérer une partie du gaz réducteur, et/ou à la conduite (21) pour récupérer une partie du flux de gaz de queue traité, pour alimenter l'unité de régénération (7).

Figure 1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110262345 A
- US 5242672 A
- US 7988767 B